# EUROPEAN PATENT APPLICATION

(11) **EP 4 783 051 A1**
(43) Date of publication of application: **29.07.2026**
(21) Application number: 25220553.9
(22) Date of filing: 03.12.2025
(51) Int. Cl.: G06F 21/62, G06F 9/455, G06F 8/61

(54) **GUARDIAN CONTAINER LAYERS FOR A SECURE CONTAINER**

(30) Priority: 22.01.2025 US 202519034323
(71) Applicant: Red Hat, LLC, Raleigh, NC 27601 (US)
(72) Inventor: GRIFFIN, Leigh, Raleigh, 27601 (US); COSENTINO, Andrea, Raleigh, 27601 (US)
(74) Representative: Murgitroyd & Company

(57) **Abstract**

Aspects of the present disclosure relate to insertion of guardian layers in container images for secure layer importing. More specifically, a method of the present disclosure includes receiving a set of instructions to build a container image comprising a plurality of layers. The method includes detecting a new layer from the plurality of layers within the set of instructions. The method includes inserting a guardian layer between the new layer and at least one of the plurality of layers. The method includes building the container image based on the set of instructions.

## Description

### TECHNICAL FIELD

Aspects of the present disclosure relate to container images, and more particularly, to guardian layers for container images for secure layer importing.

### BACKGROUND

Container images are static files that include executable code that may operate an isolated process on information technology (IT) infrastructure. Container images may be widely operable by using open standards and operate across different infrastructure. The usage of particular container images may be troublesome for organizations due in part to provenance of the container images, such that users of the container image routinely monitor container images for fraudulent images or malicious images that may negatively impact IT infrastructure. In a layer by layer approach of building a container image, developers may make a mistake and import a layer that is unproven or unknown to the user of the container image.

### SUMMARY

According to a first aspect of the invention, there is provided a method comprising:
receiving a set of instructions to build a container image comprising a plurality of layers;
detecting a new layer from the plurality of layers within the set of instructions;
inserting, by a processing device, a guardian layer between the new layer and at least one of the plurality of layers; and
building the container image based on the set of instructions.

The guardian layer may comprise diagnostic tools, and the diagnostic tools may perform, on the new layer, at least one of: a check for code quality, a scan for vulnerabilities, or a scan for outcomes.

The guardian layer may comprise a first guardian layer and a second guardian layer. The first guardian layer may be built on top of the new layer and the second guardian layer may be built under the new layer. The first guardian layer may obtain information related to layers that are built on top of the first guardian layer, and it may obtain information of contents of the new layer. The second guardian layer may block the new layer from accessing any layers that are built below the second guardian layer. The second guardian layer may obtain information related to any dependencies associated with any layers built below the second guardian layer and the second guardian layer.

The method may further comprise selecting the guardian layer for insertion based on capabilities of the new layer. The guardian layer selected for the insertion may be comprised within a guardian layer database.

According to a second aspect of the invention, there is provided a system, comprising:
a memory; and
a processing device, operatively coupled to the memory, configured to:
   receive a set of instructions to build a container image comprising a plurality of layers;
   detect a new layer from the plurality of layers within the set of instructions;
   insert a guardian layer between the new layer and at least one of the plurality of layers; and
   build the container image based on the set of instructions.

The guardian layer may comprise diagnostic tools, and the diagnostic tools may perform, on the new layer, at least one of: a check for code quality, a scan for vulnerabilities, or a scan for outcomes.

The guardian layer may comprise a first guardian layer and a second guardian layer. The first guardian layer may be built on top of the new layer and the second guardian layer may be built under the new layer. The first guardian layer may obtain information related to layers that are built on top of the first guardian layer, and it may obtain information of contents of the new layer. The second guardian layer may block the new layer from accessing any layers that are built below the second guardian layer. The second guardian layer may obtain information related to any dependencies associated with any layers built below the second guardian layer and the second guardian layer.

The processing device may be further configured to select the guardian layer for insertion based on capabilities of the new layer. The guardian layer selected for the insertion may be comprised within a guardian layer database.

According to a third aspect of the disclosure there is provided a non-transitory computer-readable medium having instructions stored thereon which, when executed by a processing device, cause the processing device to:
receive a set of instructions to build a container image comprising a plurality of layers;
detect a new layer from the plurality of layers within the set of instructions;
insert a guardian layer between the new layer and at least one of the plurality of layers; and
build the container image based on the set of instructions.

The guardian layer may comprise diagnostic tools, and the diagnostic tools may perform, on the new layer, at least one of: a check for code quality, a scan for vulnerabilities, or a scan for outcomes.

The guardian layer may comprise a first guardian layer and a second guardian layer. The first guardian layer may be built on top of the new layer and the second guardian layer may be built under the new layer. The first guardian layer may obtain information related to layers that are built on top of the first guardian layer, and it may obtain information of contents of the new layer. The second guardian layer may block the new layer from accessing any layers that are built below the second guardian layer. The second guardian layer may obtain information related to any dependencies associated with any layers built below the second guardian layer and the second guardian layer.

The processing device may be further caused to select the guardian layer for insertion based on capabilities of the new layer. The guardian layer selected for the insertion may be comprised within a guardian layer database.

### BRIEF DESCRIPTION OF THE DRAWINGS

The described aspects and the advantages thereof may best be understood by reference to the following description taken in conjunction with the accompanying drawings. These drawings in no way limit any changes in form and detail that may be made to the described aspects by one skilled in the art without departing from the spirit and scope of the described aspects.
FIG. 1 is a block diagram that illustrates an example system in accordance with some aspects of the present disclosure.
FIG. 2 is a block diagram that illustrates insertion of guardian layers in container images in accordance with some aspects of the present disclosure.
FIG. 3 is a block diagram that illustrates an example system in accordance with some aspects of the present disclosure.
FIG. 4 is a flow diagram of a method for insertion of guardian layers in container images in accordance with some aspects of the present disclosure.
FIG. 5 is a block diagram of an example of a computer system that may perform one or more of the operations described herein in accordance with some aspects of the present disclosure.

### DETAILED DESCRIPTION

The use of container images may be problematic due to a lack of knowing the makeup of layers within the container image or their source. The use of container images may also be problematic due to a lack of trust in composition layers within the container image that have not been encountered before. It is difficult to build a chain of trust, and hence a secure supply chain, while examining layers within a container image that were imported by the developer, due in part to the developer importing a layer that is unproven or unknown to an end user of the container image.

The present disclosure addresses the above-noted and other deficiencies by using a processing device to enhance the level of trust into the layers within a container image that have not been encountered before. In an example, the processing device receives a set of instructions to build a container image comprising a plurality of layers. The processing device detects a new layer from the plurality of layers within the set of instructions. The processing device inserts a guardian layer between the new layer and at least one of the plurality of layers. The processing device builds the container image based on the set of instructions.

The present disclosure provides for various technical advantages. For example, vis-à-vis receiving a set of instructions to build a container image comprising a plurality of layers, detecting a new layer from the plurality of layers within the set of instructions, inserting a guardian layer between the new layer and at least one of the plurality of layers, and building the container image based on the set of instructions, may enhance security of imported layers within the container image and in utilizing container images having new or previously unencountered layers.

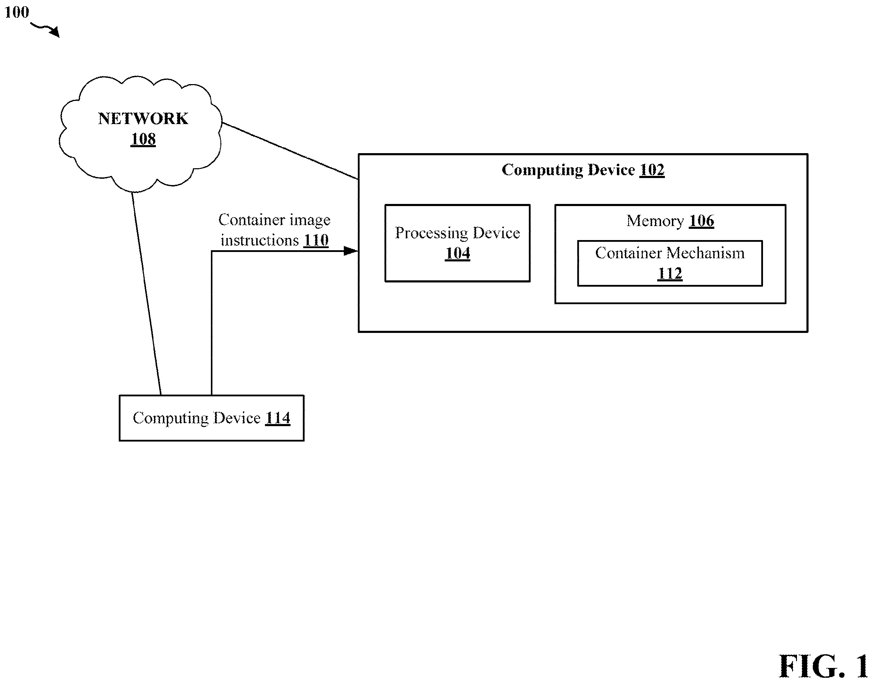

FIG. 1 is a block diagram that illustrates an example system in accordance with some aspects of the present disclosure. As illustrated in FIG. 1, the system 100 includes a computing device 102, processing device 104, memory 106, and a network 108. The computing device 102 may include hardware such as a processing device 104 (e.g., processors, central processing units (CPUs)), memory 106 (e.g., random access memory (RAM), storage devices (e.g., a hard-disk drive (HDD)), and solid-state drives (SSD), etc.), and other hardware devices (e.g., a sound card, video card, etc.). A storage device may include a persistent storage that is capable of storing data. A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices. The processing device 104 may be operatively coupled to the memory 106.

The computing device 102 may communicate with other devices (e.g., computing device 114) via a network 108. The network may be a public network (e.g., the internet), a private network (e.g., a local area network (LAN) or wide area network (WAN)), or a combination thereof. In one example, the network may include a wired or a wireless infrastructure, which may be provided by one or more wireless communications systems, such as a WiFi^{™} hotspot connected with the network and/or a wireless carrier system that can be implemented using various data processing equipment, communication towers (e.g., cell towers), etc. The network 108 may carry communications (e.g., data, message, packets, frames, etc.) between the computing device 102 and the other devices. For example, the computing device 114 may provide container image instructions 110 to the computing device 102 via the network 108. The computing device 102 may also include one or more sensors (e.g., temperature sensors, moisture sensors, etc.). The computing device may include hardware such as a processing device 104 (e.g., processors, central processing units (CPUs)), memory 106 (e.g., random access memory (RAM), storage devices (e.g., a hard-disk drive (HDD)), and solid-state drives (SSD), etc.), and other hardware devices (e.g., a sound card, a video card, etc.).

In some aspects, the computing device 102 may comprise any suitable type of computing device or machine that has a programmable processor (e.g., processing device 104) including, for example, server computers, desktop computers, laptop computers, tablet computers, smartphones, set-top boxes, etc. In some examples, the computing device 102 may include a single machine or may include multiple interconnected machines (e.g., multiple servers configured in a cluster). The computing device 102 may be implemented by a common entity/organization or may be implemented by different entities/organizations. The computing device 102 may execute or include an OS. The OS may manage the execution of other components (e.g., software, applications, etc.) and/or may manage access to the hardware (e.g., processors, memory, storage devices etc.) of a device in the computing device 102.

The computing device 102 may further include a container mechanism 112. The container mechanism 112 may include instructions for building a container image. The computing device 102 may receive the container image instructions 110 such that the container mechanism 112 generates a container image based on the container image instructions 110. For example, the container mechanism 112 may receive the container image instructions to build a container image having a plurality of layers. The container mechanism 112 may detect the presence of a new layer within the container image instructions and may insert a guardian layer between the new layer and at least one of the plurality of layers in order to build the container image based on the container image instructions.

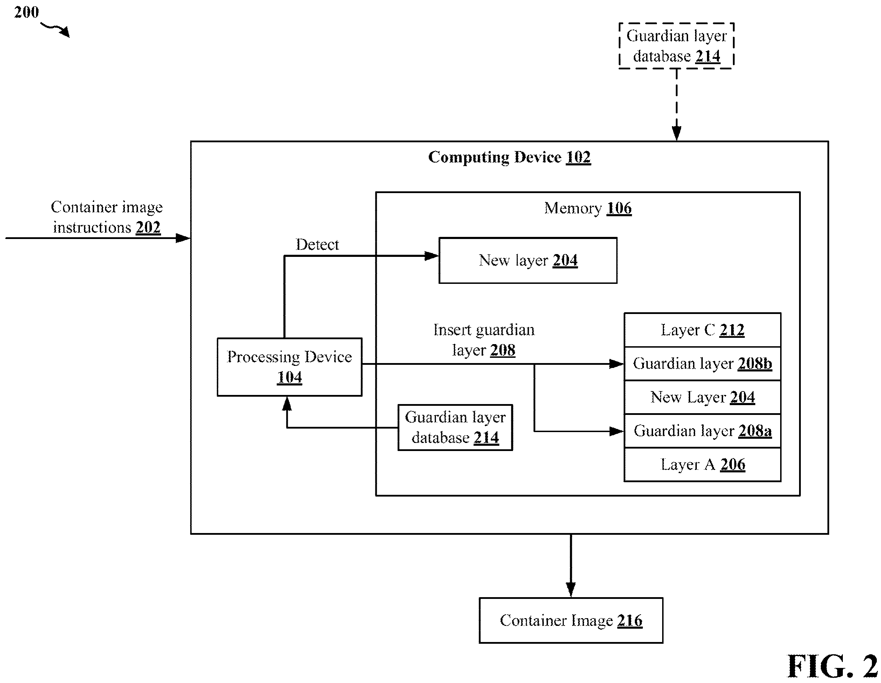

FIG. 2 is a block diagram 200 that illustrates the example system 100 of FIG. 1 in accordance with some aspects of the present disclosure. In the example depicted in FIG. 2, the computing device 102 may be configured to create a container image 216 based on container image instructions 202. For example, the processing device 104 may receive the container image instructions 202 and process the container image instructions 202 in preparation for building a container image 216 based on the container image instructions 202. The processing device 104, upon processing the container image instructions 202 may detect a new layer 204 within the container image instructions 202. The new layer 204 may be a layer that the processing device 104 is unfamiliar with or has not previously encountered. In some aspects, the new layer 204 may comprise a new or updated version of an existing layer that has been previously encountered, and the processing device 104 may be detecting this new or updated version for the first time. Based on the processing of the container image instructions 202, the processing device 104 may also determine that the container image instructions 202 include one or more layers that are familiar or have been previously encountered (e.g., layer A 206, layer C 212).

In response to the detection of a new layer, the processing device 104 may insert one or more guardian layers 208 between the new layer 204 and at least one of the plurality of layers that will form the container image. In the example of FIG. 2, when the processing device 104 detects the new layer 204, it may insert guardian layers 208 in between layer A 206 and layer C 212, such that the guardian layer 208a provides a buffer or separation between layer A 206 and the new layer 204, and the guardian layer 208b provides a buffer or separation between layer C 212 and the new layer 204.

In some aspects, the guardian layers 208 may comprise diagnostic tools. For example, the diagnostic tools may perform diagnostic procedures on the new layer 204. The diagnostic tools may include at least one of a check for code quality, a scan for vulnerabilities, a scan for outcomes, or the like. The guardian layers 208 may be customized based on the new layer 204. For example, the guardian layers 208 may be customized based on inputs associated with the new layer 204. In some aspects, the guardian layers 208 may include an adjustable level of security based on a perceived threat or challenge by the new layer. In another example, the guardian layers 208 may be customized based on a programming language of the new layer 204, an execution level of the new layer 204, a privilege level the new layer 204 may try to use, or the like. In some aspects, the guardian layers 208 may perform vulnerability scans on the new layer 204 to ensure the new layer 204 does not interfere or harm any other layers within the container image 216.

In some aspects, the guardian layers 208 may act as a guardrail to prevent the new layer 204 from accessing data from the known or familiar layers. For example, layers in the container image 216 may be built in a sequential manner and on top of each other, such that a lower guardian layer may block access to any layers below the lower guardian layer, while an upper guardian layer may be configured to examine the contents of a new layer. In some aspects, the upper guardian layer may spawn an isolated environment that may test the capabilities of the new layer using the diagnostic tools.

In some aspects, the guardian layer 208a may obtain information related to the one or more layers that are built on top of the guardian layer 208a. For example, the guardian layer 208a may determine whether the one or more layers that are built on top of the guardian layer 208a interface with the new layer 204. In some aspects, the guardian layer 208a obtains information of the content of the new layer 204. In some aspects, the guardian layer 208a or the guardian layer 208b may block or prevent the new layer 204 from accessing any of the layers that are built on top of or below the new layer 204. For example, the guardian layer 208a may prevent the new layer 204 from accessing the layer A 206. In another example, the guardian layer 208b may prevent the new layer 204 from accessing the layer C 212. In some aspects, the guardian layers 208 may obtain information related to any dependencies associated with any layers (e.g., layer A, layer C) built along with the new layer 204. For example, the guardian layer 208a may obtain information related to any dependencies associated with any layers (e.g., layer A) built below the guardian layer 208a and the guardian layer 208a. In another example, the guardian layer 208b may obtain information related to any dependencies associated with any layers (e.g., layer C) built above the guardian layer 208b and the guardian layer 208b.

Insertion of the guardian layers 208 may increase a footprint of the container image 216, but insertion of the guardian layers 208 does not change the functional capability of the container image 216 and does not create any execution challenges. In some aspects, when the guardian layers 208 have been inserted, variants of the container image 216 may be built where additional diagnostic tools may be included. For example, one or more additional guardian layers may be inserted on top of or in addition to the previously inserted guardian layers 208. The one or more additional guardian layers may indicate that additional security measures or diagnostic tools may be utilized to examine the new layer 204. For example, the one or more additional guardian layers may indicate that the new layer 204 may be examined with certain privileges or within an isolated environment. The additional guardian layer may act as a flag that may pass instructions to a host machine to instruct the host machine how to handle the container image 216 having the new layer 204. The one or more additional guardian layers may be inserted above or below the previously inserted guardian layers 208.

In some aspects, the processing device 104 may select a guardian layer for insertion into the container image 216. For example, the processing device 104 may select the guardian layer 208 to be inserted into the container image 216 based on capabilities of the new layer 204. The guardian layer 208 may be selected to correspond with the type of application or intention of the new layer 204. For example, if the new layer 204 is related to a specific application, then the guardian layer 208 may correspond to the specific application associated with the new layer 204. In another example, the new layer 204 may be examined to determine an intention associated with the new layer 204, such that an equivalent guardian layer 208 is selected for insertion. The guardian layer 208 may be selected from a guardian layer database 214. In some aspects, the guardian layer database 214 may be locally stored within the memory 106 of the computing device 102. In some aspects, the guardian layer database 214 may be at a remote location such that the guardian layer is selected from the remote guardian layer database 214. After the guardian layer 208 has been inserted, the container image 216 may be examined to ensure the container image 216 executes as intended. If the container image 216 executes as intended, then the building of the container image 216 is complete and may be released and allowed to execute as intended.

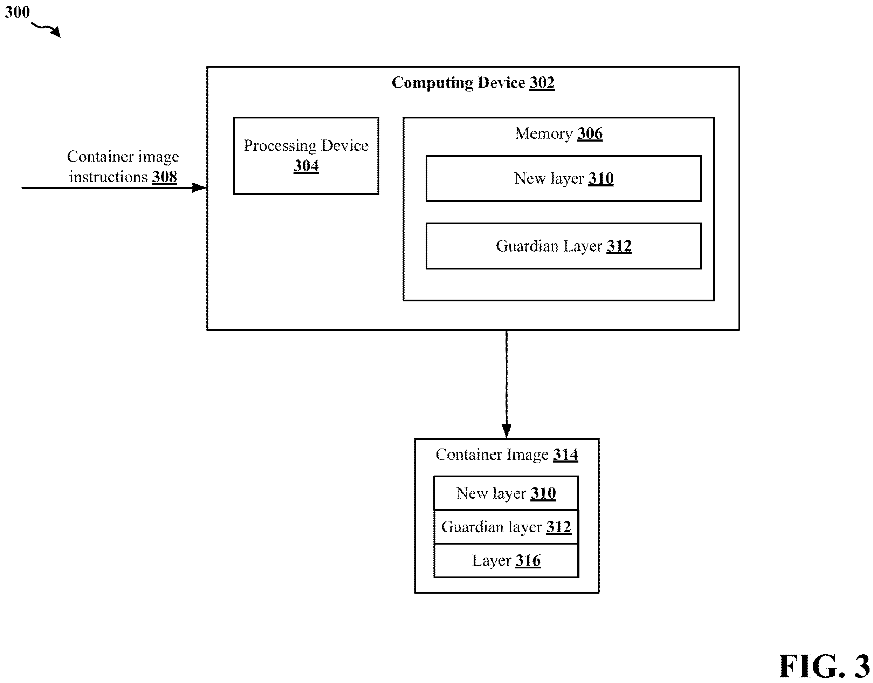

FIG. 3 is a block diagram 300 that illustrates an example system in accordance with some aspects of the present disclosure. The system includes a computing device 302. The computing device 302 includes a processing device 304 and a memory 306. The processing device is operatively coupled to the memory 306.

The processing device 304 is to receive a set of instructions 308 to build a container image comprising a plurality of layers. The processing device 304 is to detect a new layer 310 from the plurality of layers within the set of instructions 308. The processing device 304 is to insert a guardian layer 312 between the new layer 310 and at least one of the plurality of layers 316. The processing device 304 is to build the container image 314 based on the set of instructions 308.

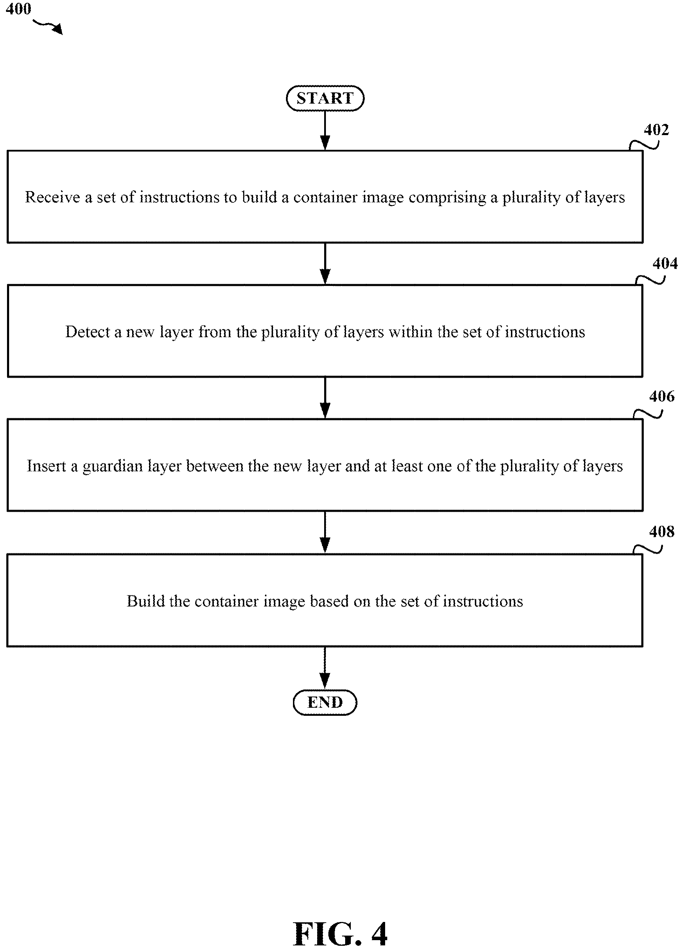

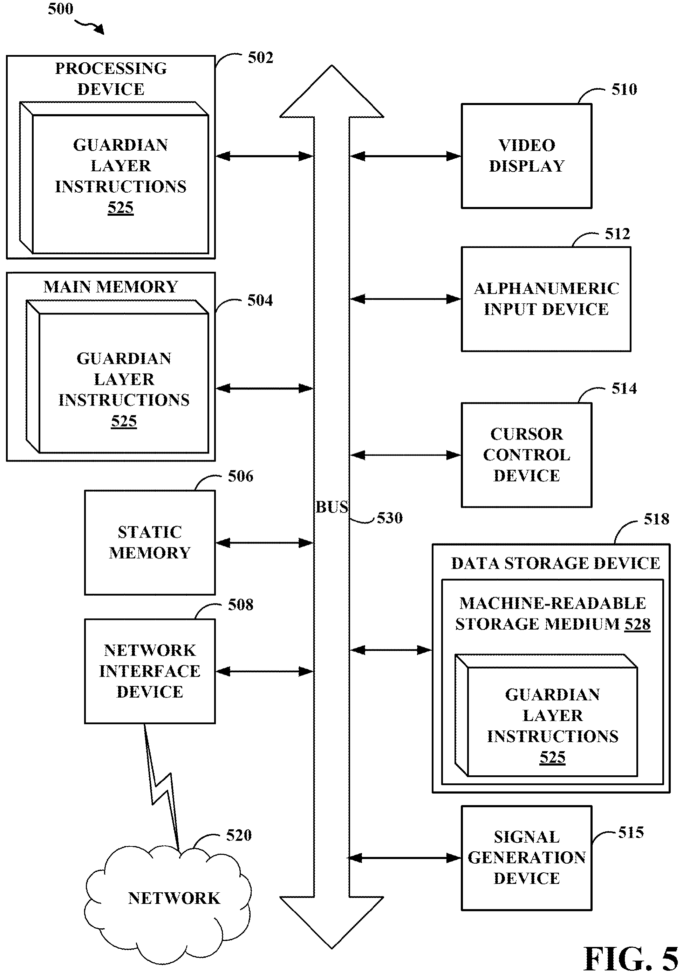

FIG. 4 is a flow diagram of a method 400 for insertion of guardian layers in container images for secure layer importing in accordance with some aspects of the present disclosure. The method 400 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some aspects, the method 400 may be performed by a computing device (e.g., computing device 102 in FIGs. 1 and 2, a computing device 302 in FIG. 3, the computer system 500 in FIG. 5, etc.).

At block 402, a processing device receives a set of instructions to build a container image comprising a plurality of layers. For example, the set of instructions may be or include container image instructions 110, 202, or 308. In an example, the container image comprising the plurality of layers may be or include container image 216 or 314.

At block 404, the processing device detects a new layer from the plurality of layers within the set of instructions. For example, the new layer may be or include new layer 204 or 310 within container image instructions.

At block 406, the processing device inserts a guardian layer between the new layer and at least one of the plurality of layers. For example, the guardian layer may be or include guardian layer 208 or 312. In an example, the at least one of the plurality of layers may be or include layer A 206, layer C 212, or layer 316.

At block 408, the processing device builds the container image based on the set of instructions. For example, the container image built based on the set of instructions may be container image 216 or 314.

In some aspects, the processing device may select the guardian layer for insertion between the new layer and at least one of the plurality of layers based on capabilities of the new layer. In some aspects, the guardian layer selected for the insertion may be comprised within a guardian layer database, such that the guardian layer is retrieved from the guardian layer database for insertion.

FIG. 5 illustrates a diagrammatic representation of a machine in the example form of a computer system 500 within which a set of instructions, for causing the machine to perform any one or more of the methodologies discussed herein for insertion of guardian layers in container images for secure layer importing. More specifically, the machine may receive a set of instructions to build a container image comprising a plurality of layers; detect a new layer from the plurality of layers within the set of instructions; insert, by a processing device, a guardian layer between the new layer and at least one of the plurality of layers; and build the container image based on the set of instructions.

In alternative aspects, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or a bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one aspect, the computer system 500 may be representative of a server.

The computer system 500 includes a processing device 502, a main memory 504 (e.g., read-only memory (ROM), flash memory, dynamic random access memory (DRAM), a static memory 506 (e.g., flash memory, static random access memory (SRAM), etc.), and a data storage device 518, which communicate with each other via a bus 530. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

The computer system 500 may further include a network interface device 508 which may communicate with a network 520. The computer system 500 also may include a video display unit 510 (e.g., a liquid crystal display (LCD) or a cathode ray tube (CRT)), an alphanumeric input device 512 (e.g., a keyboard), a cursor control device 514 (e.g., a mouse), and a signal generation device 515 (e.g., a speaker). In one example, the video display unit 510, the alphanumeric input device 512, and the cursor control device 514 may be combined into a single component or device (e.g., an LCD touch screen).

The processing device 502 represents one or more general-purpose processing devices such as a microprocessor, a central processing unit, or the like. More particularly, the processing device 502 may be a complex instruction set computing (CISC) microprocessor, a reduced instruction set computer (RISC) microprocessor, a very long instruction word (VLIW) microprocessor, or a processor implementing other instruction sets, or processors implementing a combination of instruction sets. The processing device 502 may also be one or more special-purpose processing devices such as an application specific integrated circuit (ASIC), a field programmable gate array (FPGA), a digital signal processor (DSP), a network processor, or the like. The processing device 502 is configured with guardian layer instructions 525, for performing the operations and steps discussed herein. For example, the guardian layer instructions 525 may include instructions for insertion of guardian layers in container images for secure layer importing.

The data storage device 518 may include a machine-readable storage medium 528 storing guardian layer instructions 525 (e.g., software) embodying any one or more of the methodologies of functions described herein. The guardian layer instructions 525 may also reside, completely or partially, within the main memory 504 or within the processing device 502 during execution thereof by the computer system 500; the main memory 504 and the processing device 502 also constituting machine-readable storage media. The guardian layer instructions 525 may further be transmitted or received over the network 520 via the network interface device 508.

The machine-readable storage medium 528 may also be used to store the guardian layer instructions 525 to perform a method for insertion of guardian layers in container images for secure layer importing, as described herein. While the machine-readable storage medium 528 is shown in an exemplary aspect to be a single medium, the term "machine-readable storage medium" should be taken to include a single medium or multiple media (e.g., a centralized or distributed database, or associated caches and servers) that store the one or more sets of instructions. A machine-readable storage medium includes any mechanism for storing information in a form (e.g., software, processing application) readable by a machine (e.g., a computer). The machine-readable storage medium may include, but is not limited to, a magnetic storage medium (e.g., floppy diskette), an optical storage medium (e.g., CD-ROM), a magneto-optical storage medium, a read-only memory (ROM), random-access memory (RAM), erasable programmable memory (e.g., EPROM and EEPROM), flash memory, or another type of medium suitable for storing electronic instructions.

The preceding description sets forth numerous specific details such as examples of specific systems, components, methods, and so forth, in order to provide a good understanding of several aspects of the present disclosure. It will be apparent to one skilled in the art, however, that at least some aspects of the present disclosure may be practiced without these specific details. In other instances, well-known components or methods are not described in detail or are presented in simple block diagram format in order to avoid unnecessarily obscuring the present disclosure. Thus, the specific details set forth are merely exemplary. Particular aspects may vary from these exemplary details and still be contemplated to be within the scope of the present disclosure.

Additionally, some aspects may be practiced in distributed computing environments where the machine-readable medium is stored on and or executed by more than one computer system. In addition, the information transferred between computer systems may either be pulled or pushed across the communication medium connecting the computer systems.

Aspects of the claimed subject matter include, but are not limited to, various operations described herein. These operations may be performed by hardware components, software, firmware, or a combination thereof.

Although the operations of the methods herein are shown and described in a particular order, the order of the operations of each method may be altered so that certain operations may be performed in an inverse order or so that certain operation may be performed, at least in part, concurrently with other operations. In another aspect, instructions or sub-operations of distinct operations may be in an intermittent or alternating manner.

The above description of illustrated implementations of the invention, including what is described in the Abstract, is not intended to be exhaustive or to limit the invention to the precise forms disclosed. While specific implementations of, and examples for, the invention are described herein for illustrative purposes, various equivalent modifications are possible within the scope of the invention, as those skilled in the relevant art will recognize. The words "example" or "exemplary" are used herein to mean serving as an example, instance, or illustration. Any aspect or design described herein as "example" or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an aspect" or "one aspect" or "an implementation" or "one implementation" throughout is not intended to mean the same aspect or implementation unless described as such. Furthermore, the terms "first," "second," "third," "fourth," etc. as used herein are meant as labels to distinguish among different elements and may not necessarily have an ordinal meaning according to their numerical designation. Unless specifically stated otherwise, terms such as "receiving," "detecting," "inserting," "building," "selecting," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices.

It will be appreciated that variants of the above-disclosed and other features and functions, or alternatives thereof, may be combined into may other different systems or applications. Various presently unforeseen or unanticipated alternatives, modifications, variations, or improvements therein may be subsequently made by those skilled in the art which are also intended to be encompassed by the following claims. The claims may encompass aspects in hardware, software, or a combination thereof.

## Claims

1. A method, comprising:
receiving a set of instructions to build a container image comprising a plurality of layers;
detecting a new layer from the plurality of layers within the set of instructions;
inserting, by a processing device, a guardian layer between the new layer and at least one of the plurality of layers; and
building the container image based on the set of instructions.

2. The method of claim 1, wherein the guardian layer comprises diagnostic tools, and wherein the diagnostic tools perform, on the new layer, at least one of:
a check for code quality,
a scan for vulnerabilities, or
a scan for outcomes.

3. The method of claim 1, wherein the guardian layer comprises a first guardian layer and a second guardian layer.

4. The method of claim 3, wherein the first guardian layer is built on top of the new layer and the second guardian layer is built under the new layer.

5. The method of claim 4, wherein the first guardian layer obtains information related to layers that are built on top of the first guardian layer.

6. The method of claim 4, wherein the first guardian layer obtains information of contents of the new layer.

7. The method of claim 4, wherein the second guardian layer blocks the new layer from accessing any layers that are built below the second guardian layer.

8. The method of claim 4, wherein the second guardian layer obtains information related to any dependencies associated with any layers built below the second guardian layer and the second guardian layer.

9. The method of claim 1, further comprising:
selecting the guardian layer for insertion based on capabilities of the new layer.

10. The method of claim 9, wherein the guardian layer selected for the insertion is comprised within a guardian layer database.

11. A system, comprising:
a memory; and
a processing device, operatively coupled to the memory, configured to carry out the method of any of claims 1 to 10.

12. A non-transitory computer-readable medium having instructions stored thereon which, when executed by a processing device, cause the processing device to carry out the method of any of claims 1 to 10.
